# EUROPEAN PATENT APPLICATION

(11) **EP 3 546 415 A1**
(43) Date of publication of application: **02.10.2019**
(21) Application number: 17874064.3
(22) Date of filing: 23.11.2017
(51) Int. Cl.: B66D 1/58, F16D 7/04

(54) **SAFETY DEVICE FOR A WINCH**

(30) Priority: 24.11.2016 ES 201631399 U
(71) Applicant: Fantek Industrial, S.L., 46290 Alcasser (Valencia) (ES)
(72) Inventor: VILA ORTIZ, José, 46290 Alcasser (Valencia) (ES)
(74) Representative: Ungria López, Javier
(86) International application number: PCT/ES2017/070772
(87) International publication number: WO 2018/096200

(57) **Abstract**

Winch safety device which includes: a head (1) and a drum (2), at least one clutch part (3); at least one spring (4) and a distributor plate (10); at least one notch (24) located on a first base (21) of the drum (2); declutch means; wherein the device is configured so that if the cable of the winch exerts a resistance force to the rolling which exceeds a predetermined value, the rotation of the head (1) causes an actuation of the declutch means which cause the at least one clutch part (3) to leave the at least one notch (24), declutching the head (1) and the drum (2).

## Description

### Object of the invention

The present disclosure relates to a winch safety device. It is envisaged that the safety device is arranged, either in the shaft of the winch, or in the actuation handle of the shaft of the winch.

For example, the lifting or pulling of mechanisms subjected to an excess load is, prevented by means of the safety device described in the present disclosure,

The winch safety device object of the present disclosure has special application in the sector dedicated to the design, manufacture, sale and use of load structures such as towers and scaffolds.

### Technical problem to be resolved and background of the invention

In the prior art, different types of structures are known which are intended for the construction or the assembly of heavy equipment intended for events such as the theatre, cinema, concerts, sports events, etc.

The use of scaffolding intended to provide a support structure for workers in different types of work is well known. Additionally, the towers intended to support lighting, camera and speaker at different types of events is also known.

Some structures of this type have lifting or otherwise extendable platforms which are typically actuated by means of a handle connected to a winch and to a lifting pulley mechanism. In some cases, the actuation is manual and in other cases, there is a motorised actuation which dispenses with the manual actuation handle and which is equipped with a motor connected to a winch and to the lifting pulley mechanism of the platforms.

The mentioned pulley mechanism facilitates the lifting of the platforms, while reducing the torque that must be exerted to lift the platform, therefore allowing the platforms to be lifted by one person by means of a handle, irrespective of the load to which said platforms are subjected.

Notwithstanding the foregoing in the previous paragraph, each structure or platform is normally designed for work below a maximum load level. If the maximum load level, for which it is designed, is exceeded, the structure may cause failures with the possibility of tension cables breaking and ultimately the risk of the structure collapsing.

One of the problems related to the overloading of the load structures is that, due to the pulley mechanism which reduces the torque required for lifting the platforms, it is difficult for the user to perceive differences in the torque which they must apply to lift the platform, irrespective of the variation in the load to be lifted.

Therefore, in order to ensure that the pre-established maximum load level for each structure is not exceeded, the operators must beforehand weigh each piece assembled on the structure, or otherwise, they must know the weight of the pieces assembled on the platform with certainty. This involves a drawback with respect to the pulling or lifting on the mentioned load structures of the prior art.

### Description of the invention

The present disclosure describes a winch safety device which provides a solution to the problem of overloading the structures, preventing a user being able to pull a platform which is subjected to an excess load.

The safety device is applied to winches configured to roll a cable around a shaft of the winch.

The winch safety device comprises:
- a head and a drum where head and drum axes of symmetry define a head and drum axial direction, the drum comprises fixing means to the shaft of the winch, the head is configured to be connected in the axial direction to the drum by means of anchoring means which prevent a relative displacement in the axial direction between head and drum.

The winch safety device also comprises:
- at least one clutch part;
- at least one spring and a distributor plate;
- at least one notch located on a first base of the drum, configured to receive said at least one clutch part and;
- declutch means.

The spring and the distributor plate are configured, by means of tightening, to exert a determined pressure on the at least one clutch part. This configuration causes the at least one clutch part to be introduced into the at least one notch.

The device is configured so that the rotation of the head is transmitted to the drum by means of at least one clutch part.

Additionally, the device is configured so that if the cable of the winch exerts a resistance force to the rolling which exceeds a predetermined value, the rotation of the head causes an actuation of the declutch means which cause the at least one clutch part to leave the at least one notch, thereby declutching the head and the drum.

The declutch means can comprise a plane inclined at the end of the clutch part which makes contact with the bottom of the notch. Additionally, the declutch means can comprise any active clutch means.

The declutch means preferably comprise an inclined surface located at the bottom of the at least one notch. Said surface is inclined with an ascending direction corresponding to a predetermined rotation direction for rolling the cable on the winch. The actuation of the declutch means comprises sliding the at least one clutch part on the bottom of the at least one notch, and raising the clutch part along the inclined surface of the notch such that at least one clutch part leaves the at least one notch.

According to one possible embodiment of the device, the head is manufactured in the same piece with an actuation handle of the winch.

According to another alternative embodiment, the head comprises fixing means to an actuation handle of the winch.

The head and the drum preferably comprise a substantially cylindrical geometry.

According to the preferred embodiment, the head comprises two internal mortises, a first mortise and a second mortise, with respective bottoms and lateral walls, the first mortise and the second mortise being connected together by means of a centred through-hole, directed according to the axial direction of the head.

The through-hole is configured for the anchoring means of the head to the drum to pass through it.

The second mortise comprises a geometry with a circular section, complementary to the geometry of the drum.

At the bottom of the first mortise and the second mortise, between the through-hole and the lateral wall of the first mortise and the second mortise, there is at least one hole which also connects the first mortise and the second mortise together, where said hole is configured for the insertion of the at least one clutch part.

The first base of the drum is configured to stop against the bottom of the second mortise of the head. The first base of the drum is preferably equipped with a perforation centred and aligned with the axis of symmetry of the drum. Said perforation is configured to receive the anchoring means of the head to the drum.

The at least one notch of the first base of the drum is configured to be arranged corresponding to the at least one hole and to the at least one clutch part.

According to a more preferred embodiment, the head comprises a plurality of holes distributed in a circular manner with a centre in the axis of symmetry of the head. The device therefore comprises a plurality of clutch parts, each one configured to be housed in each one of the holes. The drum comprises, in its first base, a plurality of notches, where the notches are distributed in a circular manner, with the centre in the axis of symmetry of the drum, the notches being configured to be arranged corresponding to each one of the plurality of holes and clutch parts.

In one possible embodiment, the drum comprises a second base equipped with fixing means to the shaft of the winch.

The distributor plate and the spring are arranged, by means of tightening, between the bottom of the first mortise and the anchoring means of the head to the drum.

The centred perforation of the first base of the drum is preferably arranged on an elevated central zone of said first base of the drum. The elevated central zone is configured to be introduced into the through-hole present between the first mortise and the second mortise of the head.

According to one possible embodiment, the spring comprises a plurality of conical compression washers.

The present disclosure also relates to a winch, configured for rolling a cable around a shaft of said winch, where said winch comprises the winch safety device described above.

Lastly, the present disclosure also relates to a method for avoiding the overloading of structures which use a winch for load pulling and/or lifting, where said method comprises making use of the winch safety device described above.

### Brief description of the figures

As part of the use of the at least one exemplary embodiment of the winch safety device object of the present disclosure, the following figures have been included.
Figure 1: shows a schematic view of a load support structure which incorporates a winch equipped with the safety device object of the present invention.
Figure 2: shows a lateral view of a winch handle which incorporates a possible embodiment of the safety device object of the present disclosure.
Figure 3: shows a sectioned view of the embodiment of the safety device shown in Figure 2.
Figure 4: shows a section perspective view of an embodiment of the head of the winch safety device.
Figure 5: shows a perspective view of an embodiment of the drum of the winch safety device.
Figure 6: shows a partially sectioned schematic lateral view of a winch which incorporates a possible embodiment of the safety device object of the present disclosure.
Figure 7: shows a perspective view of the handle shown in Figure 2.

### Detailed description

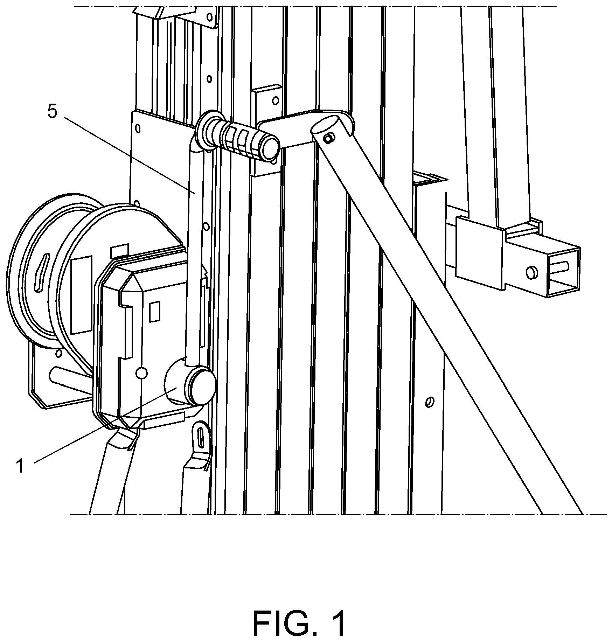

The present disclosure relates, as has already been mentioned, to a winch safety device intended for load support structures (see Figure 1).

The device comprises, as main pieces, a head (1), a drum (2), at least one clutch part (3) and a spring (4).

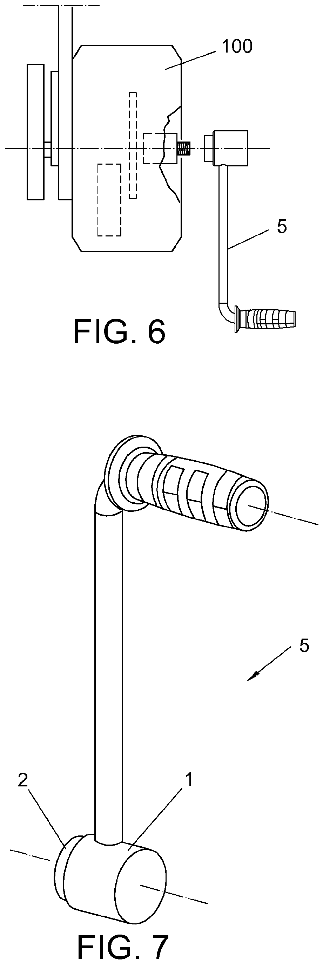

According to a preferred embodiment, the device is configured to be installed between the actuation handle (5) of the winch and the shaft (not physically represented in the figures, but only by means of a dashed line in Figure 6) of the winch.

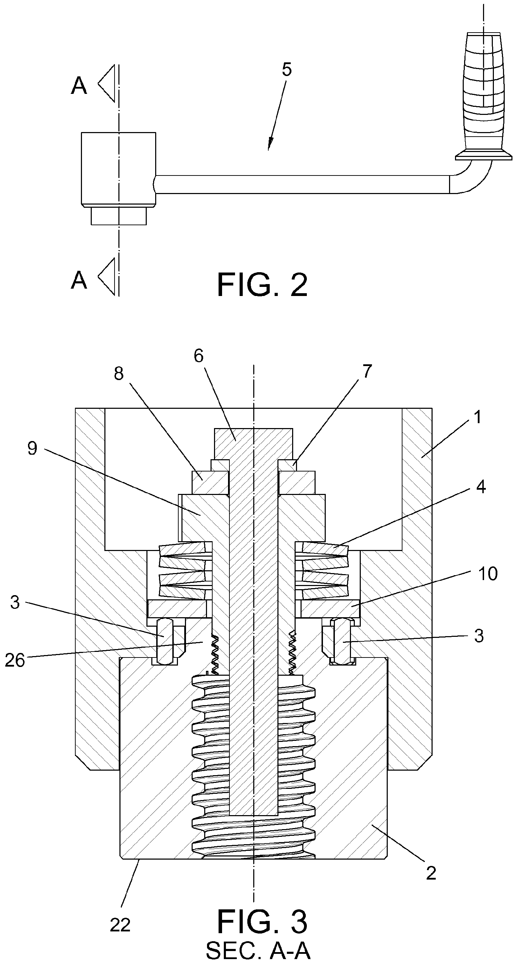

Figures 2 and 7 show an embodiment according to which the handle (5) incorporates the handle (5) of the safety device, that is to say, the handle (5) and the head (1) are manufactured as the same piece.

According to another possible embodiment, the safety device is embedded in a winch (100) (Figure 6) or can be supplied separately for its subsequent fixing between winch and handle (5) or between winch and the shaft of a motor.

The head (1) preferably comprises fixing means to the handle (5) of the winch. Said fixing means can comprise, according to different possible embodiments, a joint between head (1) and handle (5) by means of soldering, by means of screws, bolts and/or rivets or by means of coupling with complementary geometries.

The head (1) preferably comprise a cylindrical geometry with a circular or polygonal exterior section.

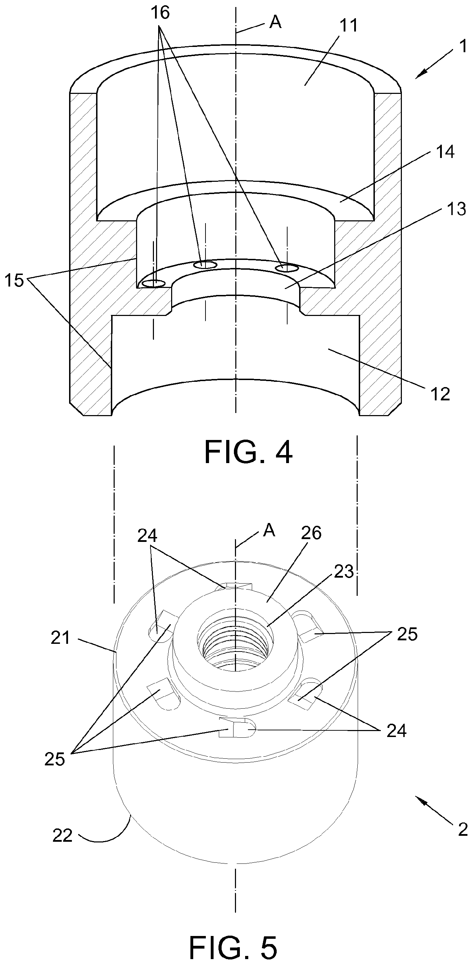

The head (1) preferably comprises two internal mortises (Figure 4), a first mortise (11) and a second mortise (12), both connected together by means of a centred through-hole (13) directed according to the axis of the head (1). The first mortise (11) comprises a section with a circular geometry (as is represented in Figure 4) or polygonal geometry and the second mortise (12) comprises a geometry with a circular section.

The second mortise (12) of the head comprises a geometry substantially complementary to the geometry of the drum (2).

According to one possible embodiment, the first mortise (11) of the head (1) comprises a staggering (14) which reduces the width of said first mortise (11) before arriving at the bottom of the first mortise (11).

At the bottom of the first mortise (11) and the second mortise (12), between the through-hole (13) and the lateral wall (15) of the first mortise (11) and the second mortise (12), there is at least one hole (16) which also connects the first mortise (11) and the second mortise (12) together. Said hole (16) is configured for the insertion of the at least one clutch part (3).

According to a preferred embodiment, a plurality of holes (16) are arranged distributed in a circular manner with a centre in the axis of the head (1). A plurality of clutch parts (3) is arranged correspondingly, each one configured to be housed in each one of the holes (16).

The head (1) is configured to be anchored to the drum (2) by means of anchoring means such as a bolt (6), a plate (7), a washer (8) and a hollow screw (9). Said anchoring means prevent a relative displacement in the axial direction (according to an axis (A) of symmetry of head (1) and drum (2)) between the head (1) and drum (2). The anchoring means are inserted in the first mortise (11) of the head (1), passing through the head (1), through the through-hole (13), from the first mortise (11) to the second mortise (12), and keeping the drum (2) housed in the second mortise (12).

The drum (2) comprises (see Figure 5) a cylindrical geometry with a circular exterior section.

The drum (2) comprises a first base (21), configured to stop against the bottom of the second mortise (12) of the head (1) and equipped with a perforation (23) centred and aligned with the axis of the drum (2), configured to receive the anchoring means (typically the bolt (6) and the hollow screw (9) or a bushing) of the head (1) to the drum (2).

The drum (2) comprises a second base (22) equipped with fixing means (for example a threaded hole) to the axis of the winch.

The first base (21) of the drum (2) comprises at least one notch (24), configured to be arranged corresponding to the at least one hole (16) and to the at least one clutch part (3).

The first base (21) of the drum (2) comprises at least one notch (24) configured to be arranged corresponding to the at least one hole (16) and to the at least one clutch part (3).

According to a preferred embodiment, the first base (21) comprises a plurality of notches (24) distributed in a circular manner with a centre in the axis of the drum (2), configured to be arranged corresponding to each one of the plurality of holes (16) and clutch parts (3).

Each notch (24) preferably comprises at least one inclined surface (25), which forms an angle greater than 90° with respect to the bottom of the notch (24).

The device comprises a washer or distributor plate (10) as well as the mentioned spring (4) located between the bottom of the first mortise (11) and the anchoring means of the head (1) to the drum (2). The spring (4) and the distributor plate (10) are arranged by means of tightening (on the part of the anchoring means) to exert a pressure on the at least one clutch part (3); by means of the pressure exerted by the spring (4), the distributor plate (10) keeps at least one clutch part (3) introduced in the interior of the at least one notch (24), during normal operation of the winch.

During the normal operation of the winch, the rotation of the handle (5) causes a rotation in the head (1) which is transferred to the drum (2) by means of the at least one clutch part (3). In turn, the rotation of the drum (2) causes a rotation of the winch which is translated into a rolling movement of the tension cable of a load support structure.

In one possible embodiment, the spring (4) consists of a plurality of conical compression washers (see Figure 3).

The load support structure is sometimes subjected an excess load and, consequently the tension cable exerts a resistance force on the winch to the elevated rolling. In some cases, in order for the at least one clutch part (3) to cause the drum (2) to rotate so that it causes the rolling of the cable on the winch, the at least one clutch part (3) must overcome an elevated tangential resistance force of the drum (2).

The device is configured (preferably by means of the convenient setting of the spring (4) and/or the convenient tightening of the spring (4)) so that when the tangential resistance force of the drum (2) surpasses a determined value, the at least one clutch part (3) stops pulling the drum (2), sliding on the bottom of the notch (24), ascending along the inclined surface (25) until it leaves the notch (24).

In the situation mentioned in the previous paragraph, it is said that the device is declutched, therefore the rotation of the handle (5) and of the head (1) is not transmitted to the drum (2) and to the winch.

Therefore, the described safety device prevents the winch being able to cause the lifting of the load support structure when it is subjected to an excess load.

When the handle (5) continues rotating after the declutching, the at least one clutch part (3) encounters a new notch (24) of the drum (2), being introduced into the new notch (24) as a result of the pressure exerted by the spring (4) and the distributor plate (10). In this situation, if the tangential resistance force of the drum (2) continues being raised, the ultimate rotation of the handle (5) ends up causing the declutching of the device, preventing the rotation of the winch.

As can be seen from the previous explanation, the inclined surface (25) of the at least one notch (24) is oriented such that it ascends in the direction of rotation of the head (1) and the drum (2) which causes the rolling of the tension cable on the winch.

According to a preferred embodiment, the centred perforation (23) of the first base (21) of the drum (2) is arranged on an elevated central zone (26) of said first base (21) of the drum (2).

The elevated central zone (26) is configured to be introduced in the through-hole (13) present between the first mortise (11) and the second mortise (12) of the head (1).

## Claims

1. A winch safety device, wherein the winch is configured for rolling a cable around a shaft of the winch, **characterised in that** it comprises:
- a head (1) and a drum (2), wherein symmetry head (1) and drum (2) axes (A) define a head (1) and drum (2) axial direction, wherein the drum (2) comprises fixing means to the shaft of the winch, wherein the head (1) is configured to be connected in the axial direction to the drum (2) by means of anchoring means which prevent a relative displacement in the axial direction between head (1) and drum (2);
- at least one clutch part (3);
- at least one spring (4) and a distributor plate (10);
- at least one notch (24) located on a first base (21) of the drum (2), configured to receive said at least one clutch part (3) and;
- declutch means;
wherein the spring (4) and the distributor plate (10) are configured, by means of tightening, to exert a determined pressure on the at least one clutch part (3) which causes the at least one clutch part (3) to be introduced into the at least one notch (24);
wherein the device is configured so that the rotation of the head (1) is transmitted to the drum (2) by means of at least one clutch part (3);
wherein the device is configured so that if the cable exerts a resistance force to the rolling which exceeds a predetermined value, the rotation of the head (1) causes an actuation of the declutch means which cause the at least one clutch part (3) to leave the at least one notch (24), declutching the head (1) and the drum (2).

2. The winch safety device according to claim 1, **characterised in that** the declutch means preferably comprise an inclined surface (25) located at the bottom of the at least one notch (24), said surface (25) being inclined with an ascending direction corresponding to a predetermined rotation direction for rolling the cable on the winch, wherein the actuation of the declutch means comprises sliding the at least one clutch part (3) on the bottom of the at least one notch (24), and raising the clutch part (3) along the inclined surface (25) of the notch (24) such that the at least one clutch part (3) leaves the at least one notch (24).

3. The winch safety device according to claim 1, **characterised in that** the head (1) is manufactured in the same one piece with an actuation handle (5) of the winch.

4. The winch safety device according to claim 1, **characterised in that** the head (1) comprises fixing means to an actuation handle (5) of the winch.

5. The winch safety device according to claim 1, **characterised in that** the head (1) and the drum (2) comprise a substantially cylindrical geometry.

6. The winch safety device according to claim 5, **characterised in that** the head (1) comprises two internal mortises, a first mortise (11) and a second mortise (12), with respective bottoms and lateral walls (15), the first mortise (11) and the second mortise (12) being connected together by means of a centred through-hole (13), directed according to the axial direction of the head (1), wherein the through-hole (13) is configured for the anchoring means of the head (1) to the drum (2) to pass through it, wherein the second mortise (12) comprises a geometry with a circular section, complementary to the geometry of the drum (2).

7. The winch safety device according to claim 6, **characterised in that** at the bottom of the first mortise (11) and the second mortise (12), between the through-hole (13) and the lateral wall (15) of the first mortise (11) and the second mortise (12), there is at least one hole (16) which also connects the first mortise (11) and the second mortise (12) together, wherein said hole (16) is configured for the insertion of the at least one clutch part (3).

8. The winch safety device according to claim 7, **characterised in that** the first base (21) of the drum (2) is configured to stop against the bottom of the second mortise (12) of the head (1), wherein the first base (21) of the drum (2) is equipped with a perforation (23) centred and aligned with the axis (A) of symmetry of the drum (2), configured to receive the anchoring means of the head (1) to the drum (2), wherein the at least one notch (24) of the first base (21) of the drum (2) is configured to be arranged corresponding to the at least one hole (16) and to the at least one clutch part (3).

9. The winch safety device according to any of the preceding claims, **characterised in that** the head (1) comprises a plurality of holes (16) distributed in a circular manner with a centre in the axis (A) of symmetry of the head (1) and wherein the device comprises a plurality of clutch parts (3), each one configured to be housed in each one of the holes (16) and wherein the drum (2) comprises, in its first base (21), a plurality of notches (24), wherein the notches (24) are distributed in a circular manner, with the centre in the axis (A) of symmetry of the drum (2), the notches being configured to be arranged corresponding to each one of the plurality of holes (16) and clutch parts (3).

10. The winch safety device according to any of the preceding claims, **characterised in that** the drum (2) comprises a second base (22) equipped with fixing means to the shaft of the winch.

11. The winch safety device according to claim 7, **characterised in that** the distributor plate (10) and the spring (4) are arranged, by means of tightening, between the bottom of the first mortise (11) and the anchoring means of the head to the drum.

12. The winch safety device according to claim 8, **characterised in that** the centred perforation (23) of the first base (21) of the drum (2) is arranged on an elevated central zone (26) of said first base (21) of the drum (2), wherein the elevated central zone (26) is configured to be introduced into the through-hole (13) present between the first mortise (11) and the second mortise (12) of the head (1).

13. The winch safety device according to any of the preceding claims, **characterised in that** the spring (4) comprises a plurality of conical compression washers.
